## Europäisches Patentamt
## European Patent Office
## Office européen des brevets

(11) Numéro de publication: **0 225 828**
**A2**

(12) **DEMANDE DE BREVET EUROPEEN**

(21) Numéro de dépôt: **86402613.3**

(22) Date de dépôt: **25.11.86**

(51) Int. Cl.⁴: **B 01 D 35/00**

(30) Priorité: **29.11.85 US 803127**

(43) Date de publication de la demande:
**16.06.87 Bulletin 87/25**

(84) Etats contractants désignés:
**DE ES FR GB IT NL**

(71) Demandeur: **SOCIETE NOUVELLE D'EXPLOITATION DES PROCEDES A.M.F.G.**
**39 rue du Moulin des Bruyères**
**F-92400 Courbevoie (FR)**

(72) Inventeur: **Cain, Thomas A.**
**13821 Sunset Ridge**
**Woodstock Illinois, 60098 (US)**

(74) Mandataire: **Tony-Durand, Serge**
**Cabinet Tony-Durand 22, Boulevard Voltaire**
**F-75011 Paris (FR)**

(54) **Filtre scellé hermétiquement, pour une transmission.**

(57) L'invention porte sur un filtre pour fluide de transmission automatique constitué d'un fond (10) en métal, d'un couvercle (20) en plastique attaché à ce fond pour renfermer un volume (30). Un élément filtrant (40) est interposé dans ce volume entre un orifice d'entrée (6) et un orifice de sortie (4). Un surmoulage plastique (50) autour de la périphérie de jonction du fond (10) et du couvercle (20) réalise un scellement hermétique du filtre.

De préférence, le fond en métal (10) a un bord rabattu (16) qui est attaché à un bord rabattu (26) du couvercle (20) par le surmoulage. Des fentes (18) dans le bord (16) du fond donnent passage au plastique du surmoulage qui vient relier la matière plastique de part et d'autre du bord rabattu (16). Ce bord se termine par une lèvre repliée (19) noyée dans le surmoulage. Les bords de l'élément filtrant (40) sont en partie enserrés dans la jonction des bords rabattus (16. 26). là où le bord du couvercle présente une lèvre relevée (29) conformée pour être épaulée par une nervure (64) du moule (60) au cours de l'opération de surmoulage. Les bords rabattus (16. 26) présentent une protubérance (27) et une dépression (17) s'engageant l'une dans l'autre pour verrouiller le couvercle sur le fond et les empêcher de glisser l'un contre l'autre.

FIG.1

EP 0 225 828 A2

**Description**

## FILTRE SCELLE HERMETIQUEMENT, POUR UNE TRANSMISSION

La présente invention a trait à des filtres pour la filtration de fluides, et plus particulièrement à des filtres scellés hermétiquement pour filtrer le fluide d'une transmission automatique.

RAPPEL DE L'ART ANTERIEUR

Les transmissions automatiques nécessitent un filtre pour éliminer les matières nocives du fluide circulant dans le système de transmission. Diverses configurations de filtres ont été proposées pour être utilisées dans des systèmes de circulation de fluide dans une transmission automatique. Un tel filtre est décrit dans le brevet Etats-Unis No 4 402 827 au nom de JOSEPH. Ce filtre est constitué de deux coquilles ayant une forme générale rectangulaire, dont les rebords périphériques sont accolés et fixés ensemble. Un élément filtrant est constitué en partie d'un long morceau de feutre imprégné de résine, replié sur lui-même. Les bords de l'élément filtrant sont enserrés entre les rebords, fixés l'un à l'autre, des deux coquilles.

Comme la plupart des filtres pour transmissions automatiques, le filtre Joseph est conçu pour être placé dans le carter d'huile de la transmission, sur le côté d'aspiration de la pompe à huile. C'est la raison pour laquelle il a un tube de sortie s'étendant à partir de la coquille supérieure, pour transmettre l'huile à la pompe. L'orifice d'entrée du filtre est un trou dans la coquille, positionné de manière à être plongé dans l'huile contenue dans le carter.

Il est essentiel que l'orifice d'entrée du filtre reste submergé dans le fluide de transmission. Si l'on permet à de l'air de traverser le filtre, cela pourrait provoquer de la cavitation dans la pompe de transmission et, en raison d'une perte de pression hydraulique sur l'embrayage, un glissement entre les plateaux d'embrayage. Ce glissement fait brûler les surfaces d'entraînement de l'embrayage d'où une défaillance totale de celui-ci , au bout de quelques secondes après le début du glissement.

Pour des filtres comme ceux du brevet Joseph, ayant des corps relativement larges et plats, les bords du filtre viennent à être exposés à l'air au cours du fonctionnement normal de l'automobile dans laquelle ils sont utilisés. Au cours de brusques manoeuvres de démarrage et de virage, le fluide dans le carter est soumis à des forces qui le font balloter de part et d'autre. Si les bords du filtre ne sont pas scellés, de l'air peut pénétrer dans le filtre, en ayant l'effet décrit plus haut.

Antérieurement, les filtres constitués d'une coquille supérieure en plastique et d'une coquille inférieure métallique ont été assemblés par sertissage du rebord du métal autour du bord de la coquille en plastique. Des essais ont montré qu'un tel sertissage n'est pas efficace pour assurer un scellement des bords qui soit étanche à l'air. Une des difficultés majeures pour obtenir un scellement des bords de ces boîtiers de filtre est que ces filtres sont soumis à des températures de fonctionnement allant de - 30° F à + 300° F ( - 34,5 à + 150° C). Dans ces conditions, il est très difficile de maintenir un scellement étanche à l'air par sertissage de deux matériaux dissemblables. En outre, beaucoup de matières de scellement ne sont pas capables de résister à cette gamme de températures de fonctionnement.

RESUME DE L'INVENTION

L'invention a pour objet un filtre pour transmission automatique qui est hermétiquement scellé sur les bords par un surmoulage plastique. Le filtre a un élément de base en métal, un couvercle en plastique, de la matière filtrante dans le volume délimité par la réunion de l'élément de base et du couvercle interposée entre les orifices d'entrée et de sortie du fluide, et un surmoulage plastique autour de la périphérie de l'assemblage des éléments en métal et en plastique, scellant le filtre hermétiquement, à l'exception des orifices d'entrée et de sortie.

Dans la forme de réalisation préférée, le surmoulage plastique est attaché à l'élément de base en métal en étant moulé autour d'une lèvre recourbée sur le bord de la flasque périphérique de l'élément de base. En outre, des fentes traversant la flasque de l'élément de base ménagent un passage à travers lequel la matière plastique s'écoule au cours du processus de moulage, en reliant de manière sûre la matière plastique de part et d'autre du flasque métallique. Une lèvre relevée est prévue autour d'une partie du flasque périphérique de l'élément en plastique formant le couvercle, cette lèvre étant soutenue, au cours de l'opération de moulage, par un anneau en acier dans une des sections du moule, afin d'empêcher l'affaissement du couvercle pendant le surmoulage. Dans les filtres utilisant un élément filtrant plié comme dans le brevet Joseph, les bords de l'élément filtrant dépassent au delà du bord de l'élément supérieur formant le couvercle, et viennent en contact avec la résine chaude de surmoulage pour obtenir un scellement entre les bords de l'élément filtrant. Sur le côté du filtre adjacent à la partie pliée de l'élément filtrant, les flasques de l'élément de base et du couvercle sont munis d'un bossage et d'une dépression de même conformation, pour réaliser un verrouillage mécanique entre ces flasques et les empêcher de glisser, l'un par rapport à l'autre.

Le surmoulage assure un scellement hermétique pour empêcher l'entrée d'air par les bords du filtre. Le mode de fixation du surmoulage sur les coquilles du boîtier empêche la séparation des composants du filtre, même lors des changements de température rencontrés au cours des conditions normales de fonctionnement de la transmission.

D'autres avantages de la présente invention, aussi bien que l'invention elle-même, seront mieux compris en se référant à la description détaillée ci-après de la forme de réalisation actuellement préférée.

## BREVE DESCRIPTION DES DESSINS

La Fig. 1 est une vue en plan, par dessus, d'un filtre selon la forme de réalisation préférée de la présente invention.

La Fig. 2 est une vue latérale en coupe, selon la ligne 2-2 de la Fig. 1.

La Fig. 3 est une autre vue latérale en coupe, selon la ligne 3-3 de la Fig. 1.

La Fig. 4 est une vue partielle en plan de l'élément de base en métal du filtre de la Fig. 1.

Les Fig. 4a et 4b sont des vues en coupe, prises respectivement selon les lignes 4a-4a et 4b-4b de la Fig. 4.

La Fig. 5 montre le segment de filtre correspondant à la Fig. 4a dans les sections du moule au cours de l'opération de surmoulage.

La Fig. 6 montre le segment de filtre correspondant à la Fig. 4b dans les sections du moule au cours de l'opération de surmoulage.

## DESCRIPTION DETAILLEE DE LA FORME DE REALISATION PREFEREE

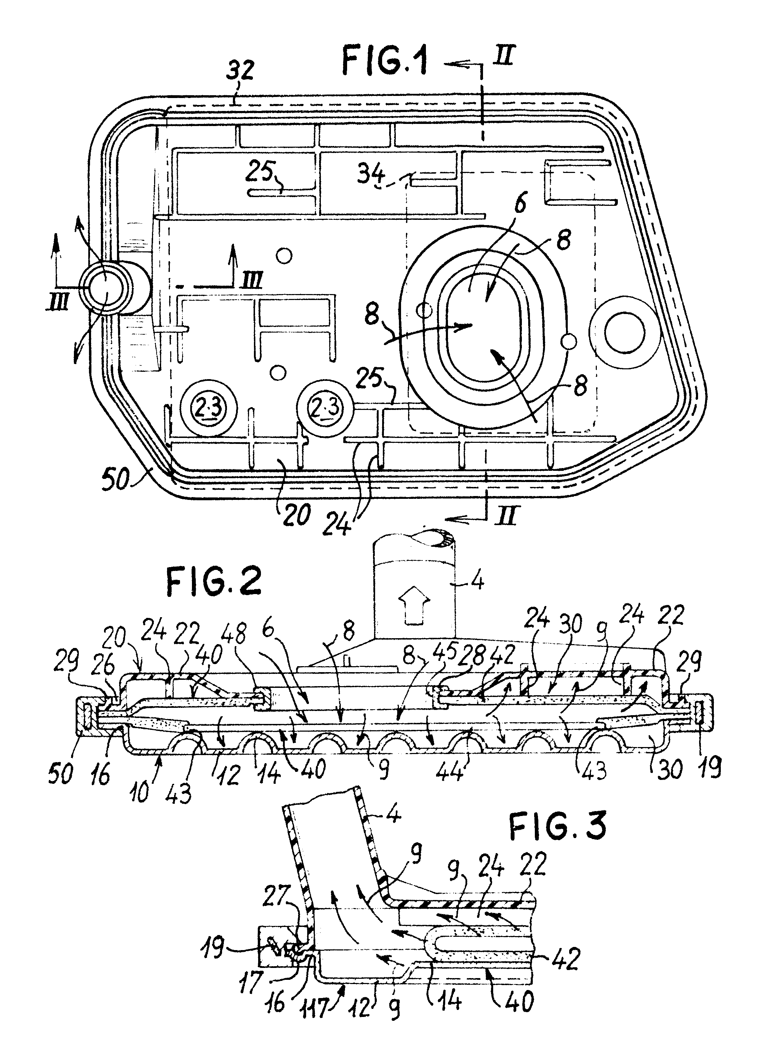

Comme le montre la Fig. 2, le filtre pour fluide de transmission selon la forme de réalisation actuellement préférée est généralement plat, à l'exception d'un tube de sortie 4 s'étendant presque perpendiculairement au filtre près du milieu d'un bord du filtre. Le tube de sortie 4 est relié à la pompe à huile de la transmission (non représentée). L'élément supérieur du filtre a aussi un orifice d'entrée d'huile 6 ménagé dans le couvercle 20 en plastique (voir Fig. 1).

Comme le montre la Fig. 2, le filtre comprend aussi un élément de base 10 en métal attaché au couvercle 20, un surmoulage plastique 50 autour de la périphérie du filtre, scellant hermétiquement la jonction de l'élément de base 10 em métal avec le couvercle 20 en plastique, et un élément filtrant 40 à l'intérieur du volume 30 formé par le couvercle et l'élément de base.

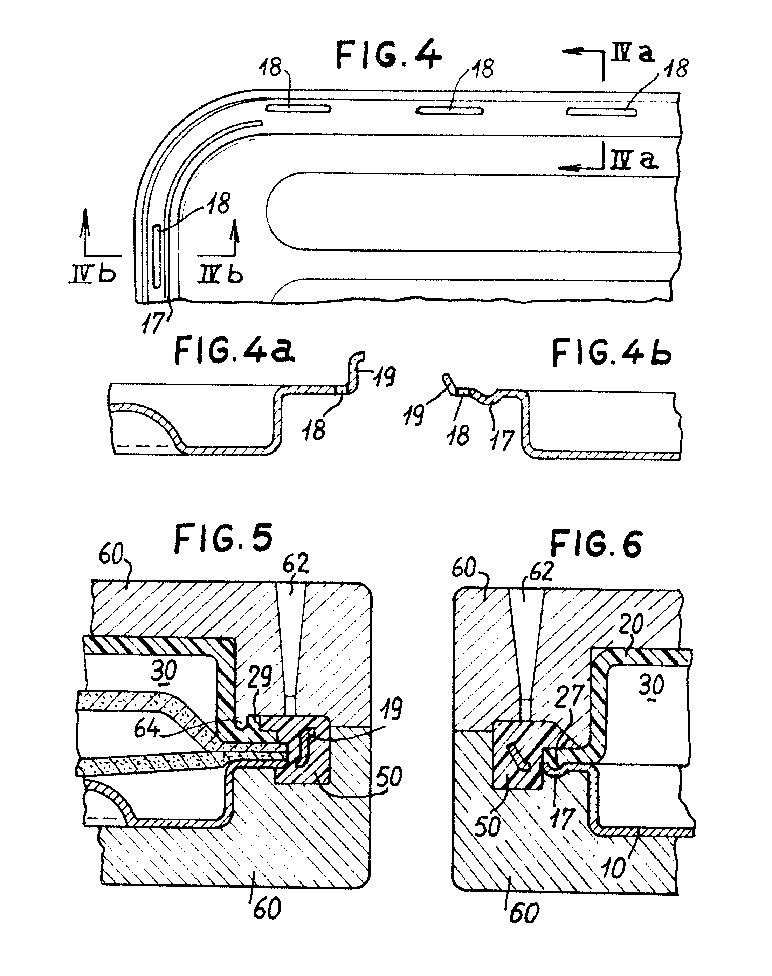

L'élément de base 10 est en forme de cuvette et a un fond 12 généralement plat, avec une pluralité de bossages ou de nervures 14. Un bord rabattu 16, espacé par rapport au plan de la paroi formant le fond 12, s'étend à partir de la périphérie de l'élément de base 10. Ce bord rabattu 16 est traversé par des fentes 18 (Fig. 4) et s'étend pour former une lèvre courbée 19 sur son bord extérieur (Fig. 4a et 4b). En outre, sur le côté gauche du filtre (tel qu'on le voit sur les Fig. 1, 2 et 4), le bord rabattu 16 de l'élément de base 10 comprend également une dépression 17 s'étendant sur la longueur du bord rabattu, juste à l'intérieur à partir des fentes 18, comme on le verra au mieux sur les Fig. 3 et 4b.

Le couvercle 20 a aussi la forme générale d'une cuvette, avec une paroi supérieure 22 s'élevant au dessus d'un bord rabattu 26. La paroi supérieure 22 a une surface inclinée vers le bas près de son centre, se terminant par un trou 28, orifice d'entrée. L'élément de base 10 et le couvercle 20 sont positionnés l'un contre l'autre, se joignant par leurs bords rabattus 16 et 26 pour enclore le volume 30. Des nervures 24 faisant partie intégrante de la paroi supérieure 22 s'étendent dans le volume 30 à partir de la paroi supérieure 22 du couvercle 20. La paroi supérieure 22 inclut aussi des nervures structurelles 25 (Fig. 1) se dressant sur sa surface, ainsi que diverses dépressions 23 qui ménagent un jeu pour empêcher le filtre d'interférer avec des parties de la transmission lorsque le filtre est placé dans le carter de la transmission.

Comme on le voit le mieux sur la Fig. 2, un élément filtrant 40 est renfermé dans le volume 30. L'élément filtrant 40 est une feuille allongée, sensiblement rectangulaire, pliée en deux, formant une enveloppe dont les bords sont serrés ensemble entre les bords rabattus 16 et 26, à leur jonction. La ligne tiretée 32 de la Fig. 1 délimite les bords de l'élément filtrant 40, la partie de cette ligne 32 sur le côté gauche de la Fig. 1 délimitant le pli. Le pli lui-même apparait le plus nettement à la Fig. 3. L'élément filtrant 40 comprend un assemblage composite qui inclut un premier matériau filtrant fin 42 en forme de feuille ayant une ouverture 43 dans sa surface et un deuxième matériau filtrant 44 à texture grossière, attaché au matériau 42 par dessus l'ouverture 43. La périphérie de l'ouverture 43 est représentée par la ligne tiretée 34 de la Fig. 1. L'élément filtrant 40 comporte une deuxième ouverture 45 qui est ovale. Les ouvertures 43 et 45 sont sur des côtés opposés du pli matériau 42, et sont ainsi espacées l'une au dessus de l'autre dans le volume 30. Les bords de l'ouverture ovale 45 correspondent aux bords du trou d'entrée 28 dans la paroi supérieure 22 du couvercle 20. Un oeillet 48 dont la circonférence est continue fixe de manière étanche les bords de l'ouverture ovale 45 au trou d'entrée 28 et délimite ainsi l'orifice 6 d'entrée du fluide. Le fluide pénètre dans le filtre et dans l'enveloppe formée par l'élément filtrant 40 en passant par l'orifice d'entrée 6, comme le montrent les flèches 8 sur les Fig. 1 et 2. Le fluide traverse l'enveloppe de matériau filtrant 42 et 44, en pénétrant dans le volume 30, et sort du filtre par le tube de sortie 4, comme le montrent les flèches 9 sur les Fig. 2 et 3. Ainsi, le matériau filtrant est interposé entre l'orifice d'entrée 6 et l'orifice de sortie 4 à l'intérieur du volume 30.

La présente invention réalise le scellement hermétique entre le couvercle plastique 20 et l'élément de base 10 en métal par l'emploi d'un surmoulage plastique 50 autour de la réunion des bords rabattus 16 et 26, bien visible sur les Fig. 2 et 3. Il y a plusieurs caractéristiques de la forme de réalisation préférée qui aident à assurer le scellement hermétique du surmoulage 50. En premier lieu, le plastique du surmoulage 50 sur chaque côté du bord rabattu 16 est en contact direct avec le plastique sur le côté opposé, à travers les fentes 18 du bord rabattu 16. Ceci aide à conserver intact le surmoulage. En second lieu, la lèvre repliée 19 de l'élément de base 10 est noyée dans le plastique du surmoulage 50. La courbure de cette lèvre et la rigidité du surmoulage plastique 50 assurent un verrouillage mécanique entre l'élément de base 10 et le surmoulage 50. En troisième lieu, le couvercle 20 a une protubérance 27 sur son bord rabattu 26 qui épouse la forme de la dépression 17 sur le côté gauche de l'élément de base 10 (Fig. 3 et 6). La dépression 17 et la protubérance 27 s'engageant l'une sur l'autre réalisent un verrouillage mécanique de l'élément de base 10 et du couvercle 20 et empêchent un mouvement latéral entre eux, étant donné qu'ils sont tenus ensemble par le surmoulage 50.

Au cours de l'opération de surmoulage, de la résine chaude est introduite dans les sections 60 du moule par le canal de coulée 62 (Fig. 5 et 6). La résine chaude du surmoulage 50 adhère aux bords exposés du matériau filtrant 42 enserrés entre les bords rabattus 16 et 26. La résine adhère aussi au couvercle plastique 20, formant ainsi un scellement hermétique.

Les parties du couvercle 20 venant au contact des bords de l'élément filtrant 40 comportent une lèvre relevée 29 près de la périphérie du bord rabattu 26. Cette lèvre protubérante 29 est épaulée par une bague en acier 64 de la section du moule 60 (Fig. 5) au cours de l'opération de soumoulage. Cette caractéristique a été trouvée utile pour empêcher le couvercle 20 de s'affaisser sous la pression de moulage du surmoulage. Il n'y a pas de lèvre relevée 29 sur les bords du couvercle 20 ne venant pas au contact de la matière filtrante 42 (Fig. 6). A la place, le surmoulage est conformé pour permettre à la section du moule 60 de se dégager après l'opération de surmoulage.

Dans la forme de réalisation préférée, le couvercle et le surmoulage sont faits de nylon chargé de verre. Les fentes 18 ont une longueur d'environ 1,5 inches (38 mm), une largeur d'environ 0,03 inch (0,8 mm) et sont espacées d'environ 3 inches (76 mm) de centre à centre. Le premier matériau filtrant fin pourra être un feutre imprégné de résine, et le deuxième matériau filtrant 44 à texture grossière pourra être un tissu de nylon. On pourra bien entendu utiliser une matière filtrante uniforme (non-composite) dans la fabrication de filtres bénéficiant du scellement hermétique de la présente invention.

Etant donné que d'autres modifications pourront être apportées à la forme de réalisation actuellement préférée sans s'écarter de la portée de l'invention, il y a lieu de comprendre que la forme de réalisation préférée du filtre selon la présente invention, décrite ici en détail, n'est qu'une illustration de divers aspects de l'invention, et que l'invention ne s'y limite pas. Il sera entendu que les revendications ci-après, incluant tous les équivalents, définissent donc la présente invention.

## Revendications

1. Filtre pour transmission automatique comprenant:
   a) un élément de base métallique (10),
   b) un couvercle en plastique (20) attaché à l'élément de base pour renfermer un volume (30),
   c) un orifice d'entrée (6) et un orifice de sortie (4) dudit volume (30) avec de la matière filtrante (40) interposée entre ces orifices à l'intérieur dudit volume, et
   d) un surmoulage plastique (50) autour de la périphérie de la jonction de l'élément de base en métal (10) et du couvercle en plastique (20) qui scelle hermétiquement ledit volume (30), à l'exception de l'emplacement desdits orifices d'entrée (6) et de sortie (4).

2. Filtre selon la revendication 1, dans lequel le couvercle (20) en plastique comprend une lèvre relevée (29) auprès d'au moins une partie de sa périphérie, conformée de manière à être épaulée par une partie (64) d'une section de moule (60) au cours de moulage du surmoulage (50).

3. Filtre selon la revendication 1, dans lequel l'élément de base (10) en métal comporte un bord rabattu (16) ayant des fentes (18) à travers lesquelles le plastique du surmoulage (50) sur chaque côté du bord rabattu métallique (16) est au contact direct avec du plastique sur l'autre côté.

4. Filtre selon la revendication 1, dans lequel l'élément de base (10) comporte une lèvre repliée (19) noyée dans le surmoulage plastique (50).

5. Filtre selon la revendication 1, dans lequel l'élément de base (10) et le couvercle (20) ont des parties de leurs bords qui comportent une protubérance (27) et une dépression (17) s'engageant l'une dans l'autre pour verrouiller mécaniquement ces éléments (10, 20) et pour les empêcher de glisser l'un sur l'autre.

6. Dans un filtre pour fluide de transmission ayant une paire d'éléments (10, 20) en forme de cuvettes attachés par leurs bords l'un contre l'autre et un élément filtrant (40) plié avec ses bords enserrés entre les bords périphériques opposés des dits éléments en forme de cuvettes, le perfectionnement comprenant :
   a) que l'un (20) des éléments en forme de cuvette est en plastique et l'autre (10) en métal,
   b) un surmoulage plastique (50) autour de la périphérie des bords des éléments en métal (10) et en plastique (20), scellant ces bords hermétiquement.

7. Filtre selon la revendication 6, dans lequel les bords de la matière filtrante (40) sont en contact avec la matière du surmoulage plastique (50) et sont scellés par elle de manière étanche.

8. Filtre selon la revendication 6, dans lequel le bord de l'élément métallique (10) en forme de cuvette est conformé de manière à se verrouiller mécaniquement avec le surmoulage plastique (50).

9. Filtre selon la revendication 6, dans lequel les parties des bords des éléments (10, 20) en forme de cuvettes, adjacentes au côté plié de l'élément filtrant (40) comprennent une protubérance (27) et une dépression (17) s'engageant l'une dans l'autre pour verrouiller mécaniquement ces éléments (10, 20) et pour les empêcher de glisser l'un sur l'autre.

10. Filtre selon la revendication 6, dans lequel le couvercle (20) en plastique comporte une lèvre relevée (29) près de sa périphérie, en contact avec les bords de l'élément filtrant (40), ladite lèvre étant conformée de manière à être épaulée par une partie (64) d'une section de moule (60) au cours du moulage du surmoulage (50).

11. Filtre pour fluide de transmission automatique comprenant :

   a) un couvercle (20) en plastique, en forme de cuvette, ayant sur son pourtour un bord rabattu (26),

   b) un fond (10) en métal, en forme de cuvette, ayant sur son pourtour un bord rabattu (16) traversé par des fentes (18) et se terminant par une lèvre repliée (19), ce fond (10) étant attaché audit couvercle (20) en opposition à ce dernier,

   c) un élément filtrant (40) plié dans le volume (30) enclos par le couvercle (20) et le fond (10), les bords de cet élément filtrant s'étendant au delà du bord rabattu (26) du couvercle (20), et

   d) un surmoulage plastique (50) entourant la jonction des bords rabattus (16, 26) du couvercle (20) et du fond (10), enchâssant la lèvre repliée (19) et s'écoulant à travers les fentes (18) du bord rabattu (16) du fond (10) et contactant les bords dépassants exposés de l'élément filtrant (40) pour réaliser un scellement hermétique entre le fond (10) et le couvercle (20).

12. Filtre selon la revendication 11 dans lequel le bord rabattu (26) du couvercle (20) adjacent auxdits bords de l'élément filtrant (40) comporte une lèvre (29) conformée de manière à être épaulée par un anneau en acier (64) dans la section de moule (60) pour empêcher le couvercle (20) de s'affaiser sous la pression de moulage du surmoulage (50).

13. Filtre selon la revendication 12 dans lequel les bords rabattus (16, 26) du fond et du couvercle, adjacents à la section pliée de l'élément filtrant (40), comportent une protubérance (27) et une dépression (17) s'engageant l'une dans l'autre pour verrouiller mécaniquement les bords rabattus l'un avec l'autre.

0225828

FIG.1

FIG.2

FIG.3

**FIG.4**

**FIG.4a**

**FIG.4b**

**FIG.5**

**FIG.6**